# EUROPÄISCHE PATENTSCHRIFT

(11) **EP 0 736 922 B1**
(45) Veröffentlichungstag und Bekanntmachung des Hinweises auf die Patenterteilung: **07.07.1999**
(21) Anmeldenummer: 96103549.0
(22) Anmeldetag: 07.03.1996
(51) Int. Cl.: H01M 10/10, H01M 10/12

(54) **Verfahren zur Herstellung eines Bleiakkumulators**
Process for manufacturing a lead accumulator
Procédé de fabrication d'un accumulateur au plomb

(30) Priorität: 08.04.1995 DE 19513343
(43) Veröffentlichungstag der Anmeldung: 09.10.1996
(73) Patentinhaber: ACCUMULATORENFABRIK SONNENSCHEIN GMBH, D-63654 Büdingen (DE)
(72) Erfinder: Sielemann, Olaf, 63636 Brachtal (DE); Niepraschk, Harald Dr., 63654 Büdingen (DE); Nemec-Losert, Peter, 63697 Hirzenhain (DE)
(74) Vertreter: Weber, Dieter, Dr.

(56) Entgegenhaltungen:
- EP-A- 0 272 474
- PATENT ABSTRACTS OF JAPAN vol. 18, no. 221 (E-1540), 20.April 1994 & JP-A-06 020715 (MATSUSHITA ELECTRIC IND CO)
- PATENT ABSTRACTS OF JAPAN vol. 11, no. 138 (E-503), 2.Mai 1987 & JP-A-61 277172 (SHIN KOBE ELECTRIC MACH CO)
- PATENT ABSTRACTS OF JAPAN vol. 11, no. 387 (E-566), 17.Dezember 1987 & JP-A-62 154476 (SHIN KOBE ELECTRIC MACH CO)

## Beschreibung

Die Erfindung betrifft ein Verfahren zur Herstellung eines Bleiakkumulators mit einem Elektrolyten in Form eines thixotropen Gels, welches als wesentliche Bestandteile Schwefelsäure und einen Gelbildner umfaßt.

Solche Akkumulatoren sind lageunabhängig, auslaufsicher und wartungsfrei und bieten daher Vorteile gegenüber Bleiakkumulatoren mit flüssigem Elektrolyten.

Die DE-PS 3 521 200 beschreibt ein Verfahren zur Herstellung solcher Bleiakkumulatoren, bei dem nach dem Einbau der Elektroden und Separatoren zunächst gelbildnerfreie Schwefelsäure eingegossen wird, um die Poren der Aktivmassen in den Elektroden sowie der Separatoren vollständig zu tränken und gegebenenfalls in den Poren der Elektroden noch vorhandene Formiersäure auszutauschen. Sodann wird der Überschuß dieses Füllelektrolyten durch Ausgießen vollständig entfernt, worauf der Elektrolytraum in einem zweiten Einfüllschrit mit dem als thixotropes Gel vorliegenden Elektrolyten gefüllt wird. Dieses Verfahren hat verfahrenstechnische Nachteile, da die Schwefelsäure nach dem ersten Einfüllschritt vollständig ausgegossen werden muß, was umständlich ist und häufig dazu führt, daß Reste des Füllelektrolyten im Elektrolytraum verbleiben und sich nach dem Einfüllen des thixotropen Gels mit diesem nur unvollständig vermischen und daher eine inhomogene Füllung des Elektrolytraumes ergeben. Außerdem ist das Einfüllen des außerhalb des Elektrolytraumes vorgefertigten thixotropen Gels umständlich, da es sich bereits beim Einfüllen aus der verflüssigten Form in die feste Form rückbilden kann.

Bei dem in der DE-OS 3 644 420 beschriebenen Verfahren werden zunächst die gereiften Platten im Batteriekasten mit gelfreier Schwefelsäure sulfatiert, so daß die gesamte für die Einstellung der Endsäuredichte des Betriebselektrolyten erforderliche Schwefelsäure als Bleisulfat in den Aktivmassen der Platten gespeichert wird, worauf die restliche Schwefelsäure ausgekippt werden muß, um anschließend ein Wasser-Gelbildnergemisch einzufüllen. Daran schließt sich dann die Formation der Platten an. Dieses Verfahren vermeidet zwar die umständliche Einfüllung des außerhalb des Batteriekastens hergestellten thixotropen Gels, nicht aber das Auskippen von überschüssiger Schwefelsäure der Sulfatierungsstufe. Auch dieses Verfahren birgt die Gefahr einer Inhomogenität des thixotropen Gels im Elektrolytraum.

In dem Verfahren der DE-OS 4 202 497 arbeitet man ebenfalls in zwei Schritten, wobei in einem ersten Schritt die Poren der Aktivmassen in den Elektroden und Separatoren mit gelbildnerfreier Schwefelsäure getränkt werden und anschließend in einem zweiten Schritt der Elektrolytraum mit dem als thixotropes Gel vorliegenden Elektrolyten aufgefüllt wird. In der ersten Einfüllstufe wird die gelbildnerfreie Schwefelsäuremenge so bemessen, daß kein freibeweglicher Elektrolyt in der Zelle vorhanden ist, so daß das Ausgießen von Schwefelsäure entfällt. Es ist aber schwierig, alle Poren zu füllen, ohne einen Schwefelsäureüberschuß in der ersten Einfüllstufe vorliegen zu haben, so daß das Verfahren kompliziert ist und häufig zu einer geschichteten und damit inhomogenen Füllung des Elektrolytraumes führt.

Ähnlich betrifft die EP-PS 0 374 187 ein zweistufiges Verfahren, bei dem zunächst die gereiften Platten nach dem Einbau in den Batteriekasten mit gelfreier Schwefelsäure benetzt und formiert werden, worauf die überschüssige Säure ausgekippt und durch eine Mischung von Alkalipolysilikatlösung mit Schwefelsäure geeigneter Konzentration ersetzt wird. Auch dieses Verfahren hat die obengeschilderten Nachteile zweistufiger Verfahren.

Die EP-OS 0 491 150 beschreibt ein Verfahren, bei dem unformierte Platten in den Batteriekasten eingebaut werden, wonach der Elektrolytraum mit der Gelbildner enthaltenden verdünnten Schwefelsäure aufgefüllt wird und sodann die Elektrodenplatten formiert werden. Dieses Verfahren ist zeitaufwendig und führt zu Inhomogenität des gelartigen Elektrolyten.

Gemäß der US-PS 4 687 718 werden ähnlich der DE-OS 3 644 420 zunächst die in den Batteriekasten eingebauten unformierten Platten mit Schwefelsäure geeigneter Konzentration benetzt, worauf die Säure ausgekippt und durch gelbildnerhaltige Schwefelsäure ersetzt wird. Anschließend erfolgt dann die Blockkastenformation.

Alle diese bekannten Verfahren erfolgen in zwei Schritten, was den Nachteil eines Hantierens mit Schwefelsäure an mehreren Stellen im Verfahrensablauf, eventuell mit zwischengeschalteten Reinigungsschritten, einschließt und durch das erforderliche Auskippen von Schwefelsäure der ersten Einfüllstufe unvermeidlich zu einer Inhomogenität des thixotropen gelartigen Elektrolyten im Elektrolytraum führt.

Die der Erfindung zugrundeliegende Aufgabe bestand somit darin, ein Verfahren zur Herstellung eines Bleiakkumulators mit einem als thixotropes Gel vorliegenden Elektrolyten zu bekommen, das die Nachteile des Standes der Technik vermeidet, einfacher durchzuführen ist, insbesondere das Hantieren mit Schwefelsäure an mehreren Stellen im Verfahrensablauf und Inhomogenitäten im Elektrolytraum vermeidet. Diese Aufgabe wird erfindungsgemäß gelöst.

Das erfindungsgemäße Verfahren zur Herstellung eines Bleiakkumulators mit einem in Form eines thixotropen Gels vorliegenden Elektrolyten, der als wesentliche Bestandteile Schwefelsäure und einen Gelbildner umfaßt, unter Einbau der Elektrodenplatten und Separatoren in den Batteriekasten, Einfüllen von Schwefelsäure und Gelbildner in den Elektrolytraum und Verschließen des Batteriekastens ist dadurch gekennzeichnet, daß man zunächst nach dem Einbau der Elektrodenplatten die gesamte für die erwünschte Elektrolytkonzentration erforderliche Schwefelsäuremenge in den Elektrolytraum einfüllt, nach der Formation der Elektrodenplatten ein wäßriges Kieselsol mit 15 bis 60 Gew.-% Feststoffanteil und einer spezifischen Oberfläche des Feststoffes von 100 bis 500 m²/g in solcher Menge zugibt, daß man eine Feststoffkonzentration des Elektrolyten, bezogen auf dessen Gesamtgewicht, von 3 bis 20 Gew.-% erhält, und den Inhalt des Elektrolytraumes sodann homogen durchmischt.

Dieses Verfahren bietet gegenüber dem Stand der Technik eine Reihe von Vorteilen. Es erfordert kein Hantieren mit Schwefelsäure an mehreren Stellen im Verfahrensablauf und keine zwischengeschalteten Reinigungsschritte. Man bekommt eine homogene Zusammensetzung des thixotropen Gels im Elektrolytraum und eine gleichmäßige Reproduzierbarkeit der Elektrolytzusammensetzung in einer Produktionsreihe. Man vermeidet ein unerwünschtes Auskippen von Schwefelsäure aus der Batterie, kann die Elektrodenplatten durch Tankformation oder Blockkastenformation formieren und behält die Poren der Elektrodenplatten gelfrei, da der Gelbildner erst nach Benetzung der Platten mit Schwefelsäure zugegeben wird.

In an sich bekannter Weise kann zusammen mit dem als Gelbildner zugegebenen wäßrigen Kieselsol gegebenenfalls Orthophosphorsäure in einer Konzentration von 1,5 bis 5 Gew.-%, bezogen auf das Gesamtgewicht des Elektrolyten, zugesetzt werden, um die Zyklenfestigkeit des Akkumulators zu erhöhen. Das wäßrige Kieselsol wird zweckmäßig in solcher Menge zugegeben, daß die Feststoffkonzentration des Elektrolyten, bezogen auf dessen Gesamtgewicht, 3 bis 20, vorzugsweise 4 bis 8 Gew.-% beträgt.

Wenn hier davon die Rede ist, daß das wäßrige Kieselsol nach der Formation der Elektrodenplatten zugegeben wird, so schließt diese Formulierung sowohl eine Tankformation als auch eine Blockkastenformation der Elektrodenplatten ein. Im Falle der Tankformation werden die Platten vor dem Einbau außerhalb des Batteriekastens durch Behandlung mit Schwefelsäure formiert und in nassem oder trockenem Zustand in den Batteriekasten eingebaut, wonach die Gesamtmenge der erforderlichen Schwefelsäure geeigneter Dichte gelbildnerfrei eingefüllt wird.

Stattdessen kann auch eine Blockkastenformation der Elektrodenplatten erfolgen, indem unformierte, gereifte Platten in den Batteriekasten eingebaut werden und die Formation durch ein geeignetes Stromprogramm im Blockkasten nach Zugabe der gesamten erforderlichen, gelbildnerfreien Schwefelsäuremenge erfolgt. In diesem Fall ist es zweckmäßig, daß die zugesetzte Schwefelsäure 1,5 bis 20 g/l Natriumsulfat enthält, um die Löslichkeit des in den Platten enthaltenen Bleisulfats zu senken. Das Stromprogramm für die nachfolgende Formation im Blockkasten ist temperaturgeführt und verläuft zwischen 35 bis 65 °C, vorzugsweise bei etwa 45 ± 5 °C. Die erforderliche Formationszeit kann durch Kühlungsmaßnahmen, vorzugsweise mit Hilfe eines Wasserbades, reduziert werden. Nach Abschluß der Formation hat die in der Batterie befindliche gelfreie Schwefelsäure eine höhere Dichte als zu Beginn der Formation, und diese höhere Dichte ist von der Dichte der Schwefelsäure zu Beginn der Formation sowie vom verwendeten Stromprogramm abhängig.

Das Einfüllen sowohl der gelbildnerfreien Schwefelsäure als auch des flüssigen wäßrigen Kieselsols ist einfach und problemlos, da es sich in beiden Fällen um leichtbewegliche Flüssigkeiten handelt. In dem wäßrigen Kieselsol können leicht übliche Stoffe in kleineren Konzentrationen aufgelöst werden, ohne die Gießfähigkeit einzuschränken, wie die oben erwähnte Orthophosphorsäure zur Erhöhung der Zyklenfestigkeit; das erwähnte Natriumsulfat zur Senkung der Löslichkeit des Bleisulfats, zur Erhöhung der Leitfähigkeit und Tiefentladefestigkeit.

Das homogene Durchmischen des Inhalts des Elektrolytraumes ist eine wesentliche Maßnahme des erfindungsgemäßen Verfahrens, um den Gelbildner gleichmäßig im Elektrolyten zu verteilen. Dieses homogene Durchmischen erfolgt zweckmäßig durch Rotation der Batterie nach Verschließen der Ventilöffnungen. Zweckmäßig erfolgt diese Rotation des Akkumulators um seine waagerechte Achse während etwa 1 bis 10 min durch 1 - bis 100malige Umdrehung. Stattdessen, aber weniger bevorzugt, bekommt man eine homogene Durchmischung auch durch eine kurzzeitige Überladung des Akkumulators und die damit verbundene Gasbildung, welche ebenfalls zu einer homogenen Durchmischung und schnellen Gelbildung führt. Da jedoch verfahrenstechnisch eine solche Gasbildung unerwünscht sein kann, da die gebildeten Gase aus der Arbeitsumgebung entfernt werden müssen, ist das Rotieren mit geschlossenem Batteriekasten bevorzugt.

### Beispiel

In einem Versuch wurde ein Akkumulator mit 12 V Nennspannung und einer Nennkapazität von 6,5 Ah verwendet. Der Akkumulator enthielt gereifte Platten und wurde mit 75 g/Zelle Schwefelsäure einer Konzentration von 38,0 Gew.-% und einem Gehalt von 7,0 g/l Na₂SO₄ gefüllt.

Nach der temperaturkontrollierten Blockkastenformation wurden dem Akkumulator 10,5 g/Zelle wäßriges Kieselsol mit einem Feststoffgehalt von 40 Gew.-% SiO₂ zugesetzt und nach provisorischem Verschluß der Einfüllöffnungen durch Rotation um die waagerechte Achse mit dem Elektrolyten in den Zellen des Akkumulators vermischt.

Nach Ersatz der provisorischen Verschlüsse durch die endgültigen Einsätze wurden die elektrischen Leistungsdaten des Akkumulators ermittelt. Zum Vergleich wurde ein herkömmlich hergestellter Akkumulator gleicher Kapazität und Nennspannung verwendet. Die ermittelten Werte können der nachstehenden Tabelle entnommen werden.

| **Entladestrom** | **% K**_{**Nenn**} **(12 V 6,5 Ah)** | **% K**_{**Nenn**} **(12 V 6,5 Ah herkömmlich** |
|---|---|---|
| I₂₀ | 105 | 105 |
| 3,4* II₂₀ | 90 | 90 |
| 10* I₂₀ | 70 | 70 |
| 20* I₀ | 58 | 55 |

Die spezifischen Leistungsdaten der aktiven Massen einzelner Platten der beiden Versuchsbatterien zeigen geringe Abweichungen, wie man der nachstehenden Tabelle entnehmen kann.

| **Entladung #** | **Spezifische Kapazität der postiven Masse (herkömmlich = 1)** |
|---|---|
| 1 | 1,02 |
| 2 | 1,00 |
| 3 | 1,00 |

Bei dem herkömmlich hergestellten Akkumulator wurde der Elektrolyt in Form eines thixotropen Gels außerhalb des Elektrolytraumes hergestellt und als Gel eingefüllt.

## Patentansprüche

1. Verfahren zur Herstellung eines Bleiakkumulators mit einem in Form eines thixotropen Gels vorliegenden Elektrolyten, der als wesentliche Bestandteile Schwefelsäure und einen Gelbildner umfaßt, unter Einbau der Elektrodenplatten und Separatoren in den Batteriekasten, Einfüllen von Schwefelsäure und Gelbildner in den Elektrolytraum und Verschließen des Batteriekastens, **dadurch gekennzeichnet**, daß man zunächst nach dem Einbau der Elektrodenplatten die gesamte für die erwünschte Elektrolytkonzentration erforderliche Schwefelsäuremenge in den Elektrolytraum einfüllt, nach der Formation der Elektrodenplatten ein wäßriges Kieselsol mit 15 bis 60 Gew.-% Feststoffanteil und einer spezifischen Oberfläche des Feststoffes von 100 bis 500 m²/g in solcher Menge zugibt, daß man eine Feststoffkonzentration des Elektrolyten, bezogen auf dessen Gesamtgewicht, von 3 bis 20 Gew.-% erhält, und sodann den Inhalt des Elektrolytraumes homogen durchmischt.

2. Verfahren nach Anspruch 1, **dadurch gekennzeichnet**, daß man den Inhalt des Elektrolytraumes durch Rotation des Akkumulators homogen durchmischt.

3. Verfahren nach Anspruch 2, **dadurch gekennzeichnet**, daß man den Akkumulator während 1 bis 10 min 1 - bis 100mal rotieren läßt.

4. Verfahren nach Anspruch 1, **dadurch gekennzeichnet**, daß man den Inhalt des Elektrolytraumes durch kurzzeitige Überladung des Akkumulators und damit verbundene Gasbildung durchmischt.

5. Verfahren nach einem der Ansprüche 1 bis 4, **dadurch gekennzeichne**t, daß man bereits formierte Platten in den Batteriekasten einbaut.

6. Verfahren nach einem der Ansprüche 1 bis 4, **dadurch gekennzeichne**t, daß man die Formation der Platten im Batteriekasten nach Einfüllen der erforderlichen Schwefelsäuremenge durchführt.

7. Verfahren nach Anspruch 6, **dadurch gekennzeichnet**, daß man Schwefelsäure mit einem Gehalt von 1,5 bis 20 g/l Natriumsulfat einfüllt.

8. Verfahren nach einem der Ansprüche 1 bis 7, **dadurch gekennzeichnet**, daß man zusammen mit dem wäßrigen Kieselsol 1,5 bis 5 Gew.-%, bezogen auf das Gesamtgewicht des Elektrolyten, Orthophosphorsäure zugibt.

9. Verfahren nach einem der Ansprüche 1 bis 8, **dadurch gekennzeichnet**, daß man zusammen mit der Schwefelsäure oder dem wäßrigen Kieselsol übliche Zusatzstoffe, wie Natriumsulfat zugibt.

10. Verfahren nach einem der Ansprüche 1 bis 9, **dadurch gekennzeichnet**, daß man das wäßrige Kieselsol in solcher Menge zugibt, daß die Feststoffkonzentration des Elektrolyten, bezogen auf dessen Gesamtgewicht, 3 bis 20, vorzugsweise 4 bis 8 Gew.-% beträgt.

## Claims

1. Process for manufacturing a lead-acid battery with an electrolyte in the form of a thixotropic gel, which includes sulphuric acid and a gel former as essential components, with installation of the electrode plates and separators in the battery case, filling of sulphuric acid and gel former into the electrolyte space and sealing of the battery case, characterised in that firstly, following the installation of the electrode plates, all of the sulphuric acid necessary for the desired electrolyte concentration is filled into the electrolyte space, after activation of the electrode plates an aqueous, silica sol with a 15 to 60% by weight solids content and a specific solids surface of 100 to 500 m²/g is added in sufficient quantity to obtain a concentration of solids in the electrolyte of 3 to 20% by weight, with respect to the total weight, and the contents of the electrolyte space is then mixed through homogeneously.

2. Process according to claim 1, characterised in that the contents of the electrolyte space is homogeneously mixed through by rotation of the battery.

3. Process according to claim 2, characterised in that the battery is allowed to rotate for 1 to 10 mins, 1 to 100 times.

4. Process according to claim 1, characterised in that the contents of the electrolyte space is mixed through by brief overcharging of the battery and the gas formation linked to this.

5. Process according to one of claims 1 to 4, characterised in that plates already activated are installed in the battery case.

6. Process according to one of claims 1 to 4, characterised in that the activation of the plates is carried out in the battery case after filling in of the necessary amount of sulphuric acid.

7. Process according to claim 6, characterised in that sulphuric acid with a 1.5 to 20 g/l sodium sulphate content is filled in.

8. Process according to one of clams 1 to 7, characterised in that 1.5 to 5% by weight of orthophosphoric acid, with respect to the total weight, is added together with the aqueous silica sol.

9. Process according to one of claims 1 to 8, characterised in that normal additives, such as sodium sulphate, is added together with the sulphuric acid or the aqueous silica sol.

10. Process according to one of claims 1 to 9, characterised in that the aqueous silica sol is added in a sufficient quantity for the concentration of solids in the electrolyte to be 3 to 20, preferably 4 to 8% by weight with respect to the total weight.

## Revendications

1. Procédé pour fabriquer un accumulateur au plomb comportant un électrolyte qui est présent sous forme d'un gel thixotrope et qui comprend, en tant que constituants essentiels, de l'acide sulfurique et un agent gélifiant, consistant à monter les plaques d'électrode et les séparateurs dans le boîtier de batterie, à introduire dans la chambre à électrolyte de l'acide sulfurique et de l'agent gélifiant et à ferner le boîtier de batterie, caractérisé en ce qu'on introduit tout d'abord dans la chambre à électrolyte, après le montage des plaques d'électrode, la totalité de la quantité d'acide sulfurique nécessaire pour avoir la concentration souhaitée de l'électrolyte, on ajoute, après l'activation des plaques d'électrode, un sol siliceux aqueux ayant une proportion de matières solides de 15 à 60% en poids et une surface spécifique de matières solides de 100 à 500 m²/g, ceci en une quantité telle que l'on obtienne une concentration en matières solides de l'électrolyte de 3 à 20% en poids, rapportée au poids total de l'électrolyte, et on effectue ensuite un mélange intime d'homogénéisation du contenu de la chambre à électrolyte.

2. Procédé selon la revendication 1, caractérisé en ce que l'on effectue le mélange intime d'homogénéisation du contenu de la chambre à électrolyte au moyen d'une rotation de l'accumulateur.

3. Procédé selon la revendication 2, caractérisé en ce que l'on fait tourner l'accumulateur 1 à 100 fois, pendant 1 à 10 minutes.

4. Procédé selon la revendication 1, caractérisé en ce que l'on effectue le mélange intime du contenu de la chambre à électrolyte au moyen d'une brève surcharge de l'accumulateur et de la production de gaz qui y est liée.

5. Procédé selon l'une des revendications 1 à 4, caractérisé en ce que l'on monte des plaques déjà activées dans le boîtier de batterie.

6. Procédé selon l'une des revendicatitions 1 à 4, caractérisé en ce que l'on réalise l'activation des plaques dans le boîtier de batterie, après l'introduction de la quantité nécessaire d'acide sulfurique.

7. Procédé selon la revendication 6, caractérisé en ce que l'on introduit de l'acide sulfurique ayant une teneur de 1,5 à 20 g/l de sulfate de sodium.

8. Procédé selon l'une des revendications 1 à 7, caractérisé en ce qu'avec le sol siliceux aqueux, on ajoute de l'acide orthophosphorique dans une proportion de 1,5 à 5% en poids, rapportée au poids total de l'électrolyte.

9. Procédé selon l'une des revendications 1 à 8, caractérisé en ce qu'avec l'acide sulfurique ou le sol siliceux aqueux, on ajoute des additifs usuels, comme du sulfate de sodium.

10. Procédé selon l'une des revendications 1 à 9, caractérisé en ce que l'on ajoute le sol siliceux aqueux en une quantité telle, que la concentration en matières solides de l'électrolyte, rapportée au poids total de ce dernier, soit de 3 à 20, de préférence de 4 à 8% en poids.
